# EUROPÄISCHE PATENTSCHRIFT

(11) **EP 1 081 386 B1**
(45) Veröffentlichungstag und Bekanntmachung des Hinweises auf die Patenterteilung: **15.03.2006**
(21) Anmeldenummer: 00111612.8
(22) Anmeldetag: 31.05.2000
(51) Int. Cl.: F04D 13/06, H02K 5/128, H02K 21/24

(54) **Axialflussmotor**
Axial flux electric motor
Moteur électrique a flux axial

(30) Priorität: 25.08.1999 DE 19940457
(43) Veröffentlichungstag der Anmeldung: 07.03.2001
(73) Patentinhaber: WILO AG, 44263 Dortmund (DE)
(72) Erfinder: Strelow, Günter, 44801 Bochum (DE)
(74) Vertreter: COHAUSZ DAWIDOWICZ HANNIG & SOZIEN

(56) Entgegenhaltungen:
- WO-A-99/08363
- US-A- 3 223 043
- US-A- 5 644 183

## Beschreibung

Die vorliegende Erfindung betrifft eine Kreiselpumpe mit Spalttopf und mit einem ein Laufrad antreibenden elektronisch kommutierten Gleichstrommotor, der einen Stator mit einer Statorwicklung aufweist und der einen mit Permanentmagneten bestückten Rotor aufweist, wobei die Pole der Permanentmagnete in axialer Richtung angeordnet sind und mit einem Lagerschild, der den vom Pumpmedium durchströmten hydraulischen Teil vom elektrischen Teil trennt und der auf der vom Pumpmedium beaufschlagten Seite eine erste Lagerbuchse zur Aufnahme der Laufradwelle trägt.

Bei derartigen so genannten bürstenlosen ("brushless") Gleichstrom ("DC")-Motoren erfolgt die Kommutierung der Spannung nicht wie bei herkömmlichen Gleichstrommotoren durch Bürstenkontakte sondern über das gezielte Schalten von Leistungshalbleitern. Diese brushless DC-Motoren gewinnen daher parallel mit der Entwicklung billiger und zuverlässiger Leistungshalbleiterelemente an Bedeutung und werden bekanntermaßen auch für den Antrieb von Kreiselpumpen, die insbesondere mit Spalttopf ausgestattet sind, eingesetzt.

Nachteilig an den bislang bekannten Motoren, die für den Antrieb von Pumpen eingesetzt werden, ist, dass sie wegen der aufwendig um den Spalttopf gewickelten Spulen eine große Bautiefe aufweisen und somit für den Einsatz der Pumpen an Orten, wo wie beispielsweise in Kraftfahrzeugen oder an Heizkörpern lediglich ein geringer Bauraum zur Verfügung steht wenig geeignet sind.

Es sind gleichfalls Pumpen bekannt, bei denen das Bauvolumen durch eine axiale Anordnung der Magneten reduziert ist. Bei diesen Pumpen sind im Laufrad Permanentmagnete eingebracht, die in axialer Richtung gepolt sind und die von hinter dem Lagerschild angeordneten Spulen mit einem treibenden Magnetfeld beaufschlagt werden. Bei den mit Axialflussantrieb ausgestatteten Pumpen erzeugen jedoch die axialen Kräfte der Magnetfelder wegen der einseitigen Lagerung der Welle radiale Kräfte am Lager, die als Unwucht am Lager angreifen und dieses nach geringer Laufzeit zerstören.

Eine derartige mit Axialflussantrieb arbeitende Pumpe ist aus der Internationalen Patentanmeldung WO 99/08363 bekannt. Sie offenbart eine insbesondere von einem brushless DC-Motor angetriebene Pumpe mit einem scheibenförmigen Rotor bestehend aus permänentmagnetischem Material, wobei der Rotor am Pumpenlaufrad angeordnet ist, und mit hinter einem Lagerschild angeordneten Spulen. Auch hier ist der Rotor einseitig durch ein in dem Lagerschild koaxial angeordnetem Lager einseitig gelagert, wobei die Pumpe jedoch keinen Spalttopf oder Spaltrohr aufweist. In einer weiteren Ausführungsvariante ist der permanentmagnetische Rotor separat auf der Rotorwelle angeordnet, wobei vorder- und rückseitig ein Stator mit Spulen angeordnet ist, mittels derer der Rotor mit einem treibenden Magnetfeld beaufschlagt werden kann.

Nachteil dieser bekannten Pumpen ist ihre unakzeptabel kurze Standzeit. Außerdem führen die notwendigen Axiallager zu großen Reibungsverlusten, was den Wirkungsgrad der Pumpen insbesondere bei kleinen Leistungen negativ beeinflusst.

Aufgabe der vorliegenden Erfindung ist es daher, eine von einem brushless DC-Motor betriebene Kreiselpumpe zu schaffen, die bei geringem baulichen Aufwand und kleinem Bauraum eine hohe Zuverlässigkeit aufweist.

Diese Aufgabe wird durch eine Kreiselpumpe nach Anspruch 1 gelöst.

Besonders vorteilhaft an der erfindungsgemäßen Pumpe ist die Kombination aus der Platz sparenden Anordnung der Magneten mit axialer Flussrichtung und deren entsprechend axialen Beaufschlagung durch induzierte Magnetfelder einerseits und der beidseitigen Lagerung der Welle andererseits. An dieser Stelle ist anzumerken, dass im Zusammenhang mit dieser Anmeldung die Gesamtheit der Wicklungen als Statorwicklung bezeichnet wird, wobei die eine Statorwicklung mehrere insbesondere getrennt zu bestromende und den Rotor jeweils einseitig beaufschlagende Wicklungsteile (Teilwicklungen) aufweist.
Jeweils ein vor und ein hinter dem Rotor liegender Wicklungsteil der Statorwicklung kann zu einer gemeinsam zu bestromenden Phasenwicklung zusammengeschaltet sein. Durch die erfindungsgemäße Bauweise, bei der die Permanentmagneten im Rotor beidseitig von Wicklungsteilen der Statorwicklung eingefasst sind, wird eine robuste und zuverlässige Pumpe mit geringer Bautiefe und vergleichsweise hohem Wirkungsgrad geschaffen. Die erfindungsgemäße Kreiselpumpe weist vorteilhafterweise einen scheibenförmigen und damit nur wenig in axialer Richtung auftragenden Rotor auf. Dabei lässt die besondere Bauweise auch einen mehrstufigen Aufbau mit mehr als einem Rotor zu, durch den der Wirkungsgrad noch weiter erhöht werden kann und die Laufeigenschaften wie beispielsweise die Laufruhe noch verbessert werden können. Dieser mehrstufige Aufbau wird durch ein sandwichartiges Zusammenfügen der einzelnen Komponenten möglich.
Besonderer Vorteil der erfindungsgemäßen Pumpe ist, dass die Welle beidseitig gelagert ist. Damit werden die auf die Gleitlager in radialer Richtung wirkenden Kräfte effektiv aufgefangen und der Verschleiß der Lager verringert. Um den Verschleiß noch weiter zu minimieren ist das Gewicht der rotierenden Komponenten wie Welle, Laufrad und Rotor vorteilhafterweise derart symmetrisch um die Lager verteilt, dass die Belastung der Lager nahezu gleichmäßig ist. Außerdem ist es durch die beidseitig des Rotors angeordneten Spulen möglich, die axialen Kräfte auf die Welle durch ein Gegeneinanderschalten der Magnetfelder vollständig zu kompensieren. Dabei kann der Rotor über die Einwirkung der durch eine vorteilhafte Schaltfolge erzeugten Magnetfelder innerhalb der Rotorkammer so zentriert werden, dass sich weitere bauliche Maßnahmen zur mechanischen Zentrierung erübrigen. Insbesondere kann ein axiales Lager entfallen, so dass die Reibungsverluste minimiert sind. Auf diese Art wird über die Elektronik ein Achsschubausgleich ermöglicht. Die Positionsüberwachung des Rotors erfolgt dabei in bekannter Weise durch Messung der in den Phasenwicklungen rückinduzierten Spannungen.

In einer besonderen Ausführungsform weist die Statorwicklung mindestens zwei Phasenwicklungen auf, wobei jede der Phasewicklungen je eine erste Teilwicklung aufweist, die in Bezug auf das Laufrad vor den Permanentmagneten angeordnet ist, und eine zweite Teilwicklung, die in Bezug auf das Laufrad hinter den Permanentmagneten angeordnet ist. In einer besonders einfachen Ausführungsform sind die Teilwicklungen zudem koaxial zueinander angeordnet. Auf diese Weise ist eine einfache elektrische Verschaltung und eine rationelle elektronische Ansteuerung jeder Teilwicklungen möglich.

Es kann jedoch auch vorteilhaft sein, die Teilwicklungen jeweils einzeln zu bestromen. Dadurch ist es möglich, die Phasenverschiebung zwischen den einzelnen Teilwicklungen zu kontrollieren und die Laufeigenschaften des Motors zu optimieren. Eine solche Phasenverschiebung kann auch durch eine im Winkel versetzte Anordnung zweier zusammengeschalteter Teilwicklungen erreicht werden.

Vorteilhafterweise sind im Falle zusammengeschalteter Teilwicklungen diese parallel oder hintereinander so geschaltet, dass sie ein synchrones Magnetfeld in gleicher Richtung erzeugen. Mit dieser Schaltung kann ein Rotor betrieben werden, in den die Permanentmagneten derart eingelassen sind, dass sie auf der einen Seite des Rotors den einen und auf der anderen Seite des Rotors den anderen Pol tragen. Diese Anordnung lässt sich besonders einfach realisieren. Um die axialen Kräfte auf die Welle und damit auf den Rotor zu kompensieren sind die Permanentmagneten in gleichmäßiger Teilung um die Achse des Laufrades herum in diesem verteilt und so gepolt, dass benachbarte Permanentmagneten jeweils Magnetfelder in entgegengesetzter Richtung erzeugen.

Besonders vorteilhaft lässt sich mit den axial gerichteten Magnetfeldern eine Kreiselpumpe betreiben, bei der der hydraulische Teil vom elektrischen Teil durch einen Spalttopf getrennt ist. Der Spalttopf braucht dabei lediglich eines der beiden Gleitlager aufzunehmen und muss nicht den gesamten Rotor umfassen. Wegen der geringen Belastung auf den Spalttopf ist dieser vorteilhafterweise aus Kunststoff gefertigt und direkt an einen Lagerschild angeformt. Der axiale magnetische Fuß begünstigt dabei die Abdichtung zwischen dem Lagerschild und dem Motorgehäuse, da lediglich axiale Kräfte auf die Dichtungen wirken. Die der Elektronik zugewandten Teilwicklungen sind vorteilhafterweise direkt auf der Stirnfläche des Lagerschildes angebracht oder in das Lagerschild eingegossen. Auf diese Weise kann der Spalt zwischen den Wicklungen und dem Rotor gering dimensioniert werden, so dass die magnetisch Kopplung zwischen den Wicklungen und den Magneten sehr direkt ist. Ein auf der dem Laufrad zugewandten Seite des Lagerschildes aufgesetzter Lagerträger nimmt in einer Bohrung die zweite Lagerbuchse auf. Durch diesen Aufbau ist eine besonders gute Durchspülung der Gleitlager gegeben, was zu einer erhöhten Lebensdauer der Lager beiträgt.

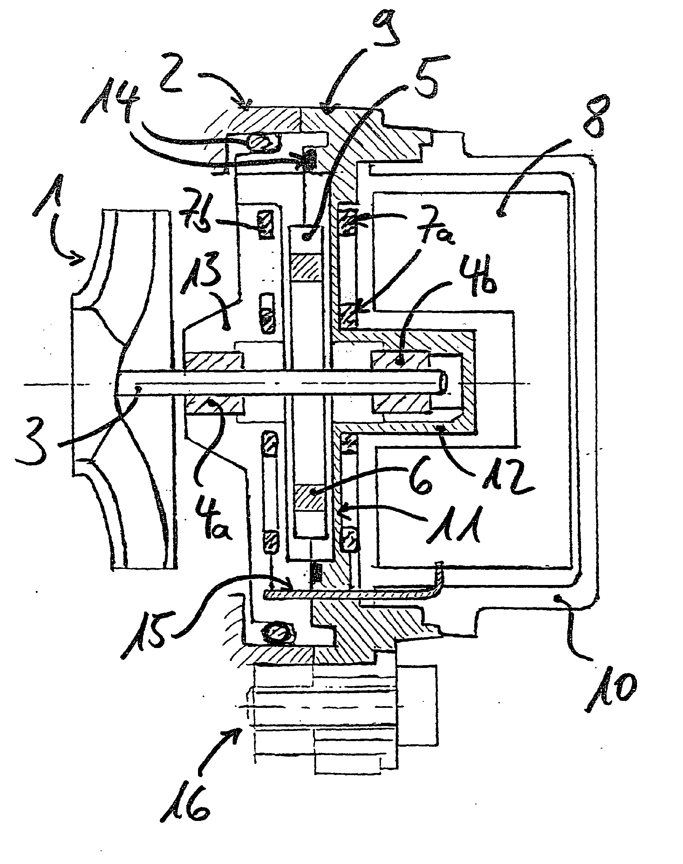

Eine besondere Ausführungsform der erfindungsgemäßen Kreiselpumpe wird im folgenden anhand der Zeichnung näher erklärt.

Die Figur zeigt einen Teil einer Kreiselpumpe mit einem Laufrad 1, das einen zentralen Saugmund und radiale Auslässe aufweist. Das die Laufradkammer umgebende Pumpengehäuse 2 ist in der Zeichnung lediglich in den an den elektrischen Teil grenzenden Bereichen dargestellt. Das Laufrad sitzt auf einer Welle 3, die in zwei Lagerbuchsen 4a und 4b eines Gleitlagers drehbar gelagert ist. Auf der Welle 3 ist ein Rotor 5 in Form einer Scheibe drehfest angebracht. Im Rotor 5 sind Permanentmagneten 6 eingelassen, deren Magnetfeld in axialer Richtung parallel zur Welle 3 ausgerichtet ist.

Der Rotor 6 wird durch Magnetfelder in Drehung versetzt, die von bestromten Teilwicklungen 7a und 7b der Statorwicklung erzeugt werden, die jeweils zu einer Phasenwicklung zusammengeschaltet sind. Die Kommutierung der Felder erfolgt elektronisch mittel einer Steuerelektronik 8. Von einer Phasenwicklung liegt eine Teilwicklung 7a in Bezug auf das Laufrad 1 diesseits und eine Teilwicklung 7b jenseits des Rotors 5 und seiner Permanentmagneten 6. In diesem Ausführungsbeispiel sind zwei von sechs koaxial angeordneten Phasenwicklungen mit je zwei Teilwicklungen 7a und 7b dargestellt. Die Teilwicklungen 7a und 7b sind parallel geschaltet und erzeugen ein Magnetfeld in gleicher Richtung parallel zur Achse der Permanentmagneten.

Der die Elektronik 8 ist in einem Gehäuse untergebracht, das einerseits von einem Lagerschild 9 begrenzt ist, wobei auf den Lagerschild 9 ein Motordeckel 10 aufgesetzt und mittels einer Rastverbindung befestigt ist. Der Lagerschild 9 trennt den hydraulischen Teil vom elektrischen Teil der Pumpe und trägt auf seiner der Elektronik zugewanden Seite die Teilwicklungen 7a. Das von den Teilwicklungen 7a erzeugte Magnetfeld tritt durch eine dünne Wandung 11 des Lagerschildes und greift direkt an den Permanentmagneten 6 an. Auf der vom Pumpmedium beaufschlagten Seite weist der Lagerschild eine topfförmige Ausnehmung 12 auf, in welche die Lagerbuchse 4b eingedrückt ist.

Die zu den Teilwicklungen 7a korrespondierenden Wicklungen 7b sind in einem Lagerträger 13 eingelassen, der auf der dem Laufrad 1 zugewandten Seite des Lagerschildes 9 auf diesem aufsitzt und der die zweite Lagerbuchse 4a trägt. Durch den Lagerschild 9 einerseits und den Lagerträger 13 andererseits wird ein vom Pumpmedium durchspülter Rotorraum begrenzt. Die Abdichtung zwischen dem Lagerschild 9 und dem Lagerträger 13 sowie zwischen dem Lagerträger 13 und dem Pumpengehäuse 2 geschieht durch profilierte Dichtringe 14.

Die elektrische Verbindung zwischen der Steuerelektronik 8 und den Teilwicklungen 7a und 7b geschieht mittels eines Leiters 15, der den Lagerschild 9 durchragt und an den die Teilwicklungen 7a und 7b mit Wicklungsenden angeschlossen sind. Die mechanische Verbindung zwischen dem Lagerschild 9 und dem Pumpgehäuse 2 wird über eine Schraubverbindung 16 hergestellt.

## Patentansprüche

1. Kreiselpumpe mit Spalttopf und mit einem ein Laufrad antreibenden elektronisch kommutierten Gleichstrommotor, der einen Stator mit einer Statorwicklung aufweist und der einen mit Permanentmagneten bestückten Rotor aufweist, wobei die Pole der Permanentmagnete in axialer Richtung angeordnet sind und mit einem Lagerschild, der den vom Pumpmedium durchströmten hydraulischen Teil vom elektrischen Teil trennt und der auf der vom Pumpmedium beaufschlagten Seite eine erste Lagerbuchse zur Aufnahme der Laufradwelle trägt,
**dadurch gekennzeichnet, dass** Teilwicklungen (7b) der Statorwicklung in Bezug auf das Laufrad (1) vor und andere Teilwicklungen (7a) der Statorwicklung in Bezug auf das Laufrad (1) hinter den im oder am Rotor (5) befindlichen Permanentmagneten (6) angeordnet sind und dass ein Rotorraum einerseits von dem Lagerschild (9) und andererseits von einem Lagerträger (13) begrenzt ist.

2. Kreiselpumpe nach Anspruch 1,
**dadurch gekennzeichnet, dass** die Statorwicklung mindestens zwei Phasenwicklungen aufweist, wobei jede Phasenwicklung je eine erste Teilwicklung (7b) hat, die vor den Permanentmagneten (6) angeordnet ist, und je eine zweite Teilwicklung (7a) hat, die hinter den Permanentmagneten (6) angeordnet ist.

3. Kreiselpumpe nach Anspruch 2,
**dadurch gekennzeichnet, dass** die beiden Teilwicklungen (7a,7b) einer Phasenwicklung koaxial zueinander angeordnet sind.

4. Kreiselpumpe nach einem der vorherigen Ansprüche,
**dadurch gekennzeichnet, dass** jeweils zwei Teilwicklungen (7a,7b) einer Phasenwicklung parallel oder in Reihe geschaltet sind und ein synchrones Magnetfeld in gleicher Richtung erzeugen.

5. Kreiselpumpe nach einem der vorherigen Ansprüche,
**dadurch gekennzeichnet, dass** Teilwicklungen (7a) auf der dem Laufrad (1) abgewandten Stimfläche des Lagerschildes (9) angebracht sind.

6. Kreiselpumpe nach einem der vorherigen Ansprüche,
**dadurch gekennzeichnet, dass** Teilwicklungen (7a) in den Lagerschild (9) eingegossen sind.

7. Kreiselpumpe nach einem der vorherigen Ansprüche,
**dadurch gekennzeichnet, dass** der Lagerträger (13), auf der dem Laufrad (1) zugewandten Seite des Lagerschildes (9) auf diesem aufsitzt und eine zweite Lagerbuchse (4a) zur Aufnahme der Laufradwelle (3) trägt.

8. Kreiselpumpe nach einem der vorherigen Ansprüche,
**dadurch gekennzeichnet, dass** die Permanentmagneten (6) in gleichmäßiger Teilung um die Achse des Laufrades (1) herum im Rotor verteilt sind und dass benachbarte Permanentmagneten (6) entgegengesetzt gepolt sind.

9. Kreiselpumpe nach einem der vorherigen Ansprüche,
**dadurch gekennzeichnet, dass** der Rotor (5) scheibenförmig ist.

## Claims

1. Centrifugal pump, comprising a can and an electronically commutated DC motor driving an impeller, which motor includes a stator with a stator winding and a rotor fitted with permanent magnets, the poles of the permanent magnets being arranged in the axial direction, the centrifugal pump further comprising an end plate separating the hydraulic part through which the pumped medium flows from the electrical part and carrying a first bearing bush for receiving the impeller shaft on the side in contact with the pumped medium, **characterised in that** partial windings (7b) of the stator winding are arranged in front of the permanent magnets (6) located in or on the rotor (5), and other partial windings (7a) of the stator winding are arranged behind said permanent magnets (6), with respect to the impeller (1), and that a rotor chamber is delimited on one side by the end plate (9) and on the other by a bearing carrier (13).

2. Centrifugal pump according to claim 1, **characterised in that** the stator winding includes at least two phase windings, each phase winding having a first partial winding (7b) arranged in front of the permanent magnets (6) and a second partial winding (7a) arranged behind the permanent magnets (6).

3. Centrifugal pump according to claim 2, **characterised in that** both partial windings (7a, 7b) of a phase winding are arranged coaxially with one another.

4. Centrifugal pump according to any one of the preceding claims, **characterised in that** in each case two partial windings (7a, 7b) of a phase winding are connected in parallel or in series and generate a synchronous magnetic field in the same direction.

5. Centrifugal pump according to any one of the preceding claims, **characterised in that** partial windings (7a) are mounted on the end face of the end plate (9) facing away from the impeller (1).

6. Centrifugal pump according to any one of the preceding claims, **characterised in that** partial windings (7a) are cast into the end plate (9).

7. Centrifugal pump according to any one of the preceding claims, **characterised in that** the bearing carrier (13) is mounted on the side of the end plate (9) facing towards the impeller (1) and carries a second bearing bush (4a) for receiving the impeller shaft (3).

8. Centrifugal pump according to any one of the preceding claims, **characterised in that** the permanent magnets (6) are distributed in the rotor with equal spacing around the axis of the impeller (1), and that neighbouring permanent magnets (6) have opposite polarity.

9. Centrifugal pump according to any one of the preceding claims, **characterised in that** the rotor (5) is disc-shaped.

## Revendications

1. Pompe centrifuge avec un pot d'entrefer et avec un moteur à courant continu commuté électroniquement entraînant une roue mobile, lequel présente un Stator avec un bobinage statorique et qui présente un rotor équipé d'aimants permanents, les pôles des aimants permanents étant disposés en direction axiale et avec un flasque qui sépare la partie hydraulique traversée par le liquide de pompe de la partie électrique et qui porte sur la face soumise à l'action du liquide de pompe une première douille de palier pour recevoir l'arbre de la roue mobile,
**caractérisée par le fait que** des bobinages partiels (7b) du bobinage statorique sont disposes en avant par rapport à la roue mobile (1) et d'autres bobinages partiels (7a) du bobinage statorique sont disposés en arrière des aimants permanents (6) se trouvant dans ou sur le rotor (5) et qu'un volume de rotor est limité d'un côte par le flasque (9) et de l'autre côte par un support de palier (13).

2. Pompe centrifuge selon la revendication 1, **caractérisée par le fait que** le bobinage statorique présente au moins deux 25 bobinages de phase, chaque bobinage de phase ayant à la fois un premier bobinage partiel (7b) qui est disposé en avant des aimants permanents (6) et ayant à la fois un second bobinage partiel (7a) qui est disposé en arrière des aimants permanents (6).

3. Pompe centrifuge selon la revendication 2, **caractérisée par le fait que** les deux bobinages partiels (7a,7b) d'un bobinage de phase sont disposés coaxialement l'un par rapport à l'autre.

4. Pompe centrifuge selon l'une des revendications précédentes,
**caractérisée par le fait que** respectivement deux bobinages partiels (7a,7b) d'un bobinage de phase sont montés en parallèle ou en série et engendrent un champ magnétique synchrone dans la même direction.

5. Pompe centrifuge selon l'une des revendications précédentes, **caractérisée par le fait que** des bobinages partiels (7a) sont montés sur la face frontale du flasque (9) opposée à la roue mobile (1).

6. Pompe centrifuge selon l'une des revendications précédentes, **caractérisée par le fait que** des bobinages partiels (7a) sont coulés dans le flasque (9).

7. Pompe centrifuge selon l'une des revendications précédentes,
**caractérisée par le fait que** le support de palier (13) repose sur le flasque (9) sur la face de celui-ci tournée vers la roue mobile (1) et porte une seconde douille de palier (4a) pour la réception de l'arbre de la roue mobile (3).

8. Pompe centrifuge selon l'une des revendications précédentes,
**caractérisée par le fait que** les aimants permanents (6) sont disposés selon une répartition régulière autour de Taxe de la roue mobile (1) et que des aimants permanents (6) adjacents sont polarisés en sens contraire.

9. Pompe centrifuge selon l'une des revendications précédentes,
**caractérisée par le fait que** le rotor (5) est en forme de disque.
